# EUROPÄISCHE PATENTANMELDUNG

(11) **EP 0 960 992 A2**
(43) Veröffentlichungstag der Anmeldung: **01.12.1999**
(21) Anmeldenummer: 99110015.7
(22) Anmeldetag: 21.05.1999
(51) Int. Cl.: E04G 21/16, B62B 3/10

(54) **Vorrichtungen und Verfahren zum Handhaben plattenförmiger Elemente**

(30) Priorität: 29.05.1998 DE 19824273
(71) Anmelder: Franz Carl Nüdling Basaltwerke GmbH & Co. KG, D-36037 Fulda (DE)
(72) Erfinder: Schmidt, Thomas, Dr., 36037 Fulda (DE)
(74) Vertreter: Möller, Friedrich, Dipl.-Ing.

(57) **Zusammenfassung**

Die Erfindung betrifft die Handhabung plattenförmiger Elemente (16,17,18). Herkömmlich werden bei der Montage vorgefertigter Wandelemente die Wandelemente von Arbeitskräften zum Montageort getragen und dort von Hand aufgerichtet. Dies ist nachteilig wegen der großen Anzahl der für diesen Arbeitsgang benötigten Arbeitskräfte. Die Erfindung löst das Problem diesen Arbeitsgang günstiger zu gestalten. Die Erfindung schlägt daher vor wenigstens ein auf einer ersten Kante im wesentlichen aufrecht stehendes plattenförmiges Element (16,17,18) aufzunehmen, das plattenförmige Element über eine seiner Ecken zu kippen, insbesondere derart, daß es in eine schrägliegende Position gelangt, in der eine der ersten Kante benachbarte zweite, insbesondere kurze, Kante nach unten weist und im wesentlichen waagerecht ausgerichtet wird und es in einer auf der zweiten Kante im wesentlichen aufrecht stehende Position aufgerichtet wird.

## Beschreibung

Die Erfindung betrifft Vorrichtungen sowie ein Verfahren zum Handhaben plattenförmiger Elemente, insbesondere von Bauwerksteilen.

Beim Bauen von Gebäuden verwendet man zunehmend mehr Fertigbauteile, um eine Beschleunigung des Baufortschritts zu erreichen. Derartige Fertigbauteile setzt man vor allem bei nicht tragenden Trennwänden ein. Die bei diesen vorgefertigten Trennwänden verwendete Wandelemente haben in etwa die Höhe eines Geschosses. Die Breite dieser Wandelemente ist derart bemessen, daß sie zwar so schmal sind₉ daß man sie noch bewegen kann, jedoch sind diese Wandelemente gleichwohl von nicht zu vernachlässigender Breite, damit der Beschleunigungseffekt des Baufortschritts nicht durch eine Vielzahl von schmalen aneinanderzusetzenden Wandelementen unnötig verzögert wird.

Aufgrund der großen Höhe und der nicht zu vernachlässigenden Breite derartiger Wandelemente verfügen die Wandelemente über ein erhebliches Gewicht von bis zu 150 kg. Arbeitskräfte müssen diese Wandelemente vom Ort der Anlieferung zur entsprechenden Montagestelle transportieren und dort aufrichten. Dieser Transport und das Aufrichten erfolgt herkömmlicherweise durch eine Vielzahl von Arbeitskräften, welche die Wandelemente zum Montageort tragen und dort von Hand aufrichten.

Hierbei ist es nachteilig, daß aufgrund des hohen Gewichts der Wandelemente viele Arbeitskräfte für diesen Arbeitsgang benötigt werden. Dies macht die Verwendung derartiger Wandelemente teuer.

Der Erfindung liegt daher das Problem zugrunde, diesen Prozeß des Transportierens und Aufrichtens von Wandelementen günstiger zu gestalten.

Zur Lösung dieses Problems ist eine erste erfindungsgemäße Vorrichtung zum Handhaben plattenförmiger Elemente, insbesondere von Bauwerksteilen, versehen mit einer Aufnahmefläche zum Aufnehmen wenigstens eines plattenförmigen Elements und einem Abstandshalter zum Halten eines Teilbereichs der Aufnahmefläche im Abstand zum Untergrund während eines Kippens der Vorrichtung und zum Drehen der Kipprichtung während des Kippens der Vorrichtung.

Eine zweite erfindungsgemäße Vorrichtung zum Handhaben plattenförmiger Elemente, insbesondere von Bauwerksteilen, ist versehen mit wenigstens einer Aufnahmeeinrichtung, insbesondere Aufnahmeschaufel, zur Aufnahme eines plattenförmigen Elements, insbesondere in schräg liegender Position mit einer, insbesondere kurzen, nach unten weisenden und im wesentlichen waagerecht ausgerichteten Kante, und einer Zugeinrichtung zum Aufrichten des aufgenommenen plattenförmigen Elements insbesondere in einer auf dieser Kante im wesentlichen aufrecht stehenden Position.

Ein erfindungsgemäßes Verfahren zum Handhaben plattenförmiger Elemente, insbesondere von Bauwerksteilen, weist folgende Schritte auf: Aufnehmen wenigstens eines auf einer ersten, insbesondere langen, Kante im wesentlichen aufrecht stehenden plattenförmigen Elements; Kippen des plattenförmigen Elements über eine seiner Ecken, so daß das plattenförmige Element in eine schräg liegende Position gelangt, in der eine der ersten Kante benachbarte zweite, insbesondere kurze, Kante, nach unten weist und im wesentlichen waagerecht ausgerichtet ist; und Aufrichten des plattenförmigen Elements in eine auf der zweiten Kante im wesentlichen aufrecht stehenden Position.

Durch die erste erfindungsgemäße Vorrichtung und das erfindungsgemäße Verfahren werden deutlich weniger Arbeitskräfte benötigt, um schwere Wandelemente einzubauen. Jede einzelne Arbeitskraft hat durch die Erfindung wesentlich weniger Gewicht zu heben. Dies spart Kosten und schont die Gesundheit der die Wandelemente einbauenden Arbeitskräfte.

Ferner benötigen die erste erfindungsgemäßen Vorrichtungen nur sehr wenige bewegliche Teile. Dies ist deshalb von Bedeutung, da bewegliche Teile auf Baustellen schnell verdrecken oder verkleben und so in ihrer Funktionsfähigkeit beeinträchtigt werden können. Derartige Verunreinigungen kommen vor allem durch Mörtelspritzer, Staub und dergleichen mehr zu Stande. Solche Verunreinigungen können auch die Lebensdauer von beweglichen Teilen verkürzen. Aufgrund der wenigen beweglichen Teile kommen die erfindungsgemäßen Vorrichtungen daher mit einem sehr geringen Wartungsaufwand aus.

Schließlich ermöglicht die Erfindung einen seitlich aufrechten Transport von rechteckförmigen Wandelementen vom Lagerort zum Montageort. Dadurch ist es ohne weiteres möglich die Wandelemente durch schmale Türöffnungen hindurchzumanövrieren.

Eine bevorzugte Weiterbildung der erstgenannten Vorrichtung ist versehen mit einem ersten und einem zweiten Auflagepunkt, wobei die Vorrichtung um die durch diese Punkte bestimmte Achse kippbar ist, wodurch ein plattenförmiges Element von einer auf einer ersten, insbesondere langen, Kante im wesentlichen aufrecht stehenden Position von der Vorrichtung aufnehmbar ist, einem Abstandshalter, der derart angeordnet ist, daß er einen dritten Auflagepunkt bildet, falls die Vorrichtung in eine erste Gleichgewichtsstellung gekippt ist, in der ein aufnehmbares plattenförmiges Element in eine auf der ersten Kante schräg stehende Position gelangen kann, und einer Querseite, die derart angeordnet ist, daß sie einen vierten Auflagepunkt bildet, falls die Vorrichtung in eine zweite Gleichgewichtsstellung gekippt ist, in der ein aufnehmbares plattenförmiges Element in eine schräg liegende Position gelangt in der eine der ersten Kante benachbarte zweite, insbesondere kurze, Kante nach unten weist und im wesentlichen waagerecht ausgerichtet ist, wobei die Vorrichtung in zweiter Gleichgewichtsstellung auf einem der ersten und zweiten Auflagepunkte, sowie dem dritten und vierten Auflagepunkt ruht.

Bei dieser Weiterbildung gelangt die Vorrichtung und damit ein darauf lagerndes plattenförmiges Element nach dem ersten Kippvorgang in eine erste Gleichgewichtsstellung. In dieser Stellung läßt sich die Vorrichtung bequem, und ohne die Vorrichtung samt plattenförmigen Element ausbalancieren zu müssen, verschieben. Insbesondere ist durch diese Gleichgewichtsstellung ein manuelles Abstützen durch die Arbeitskraft nicht nötig.

Das plattenförmige Element steht schräg mit geringer Neigung gegenüber der Vertikalen. Dadurch ist nur eine geringe Standfläche nötig. Auf diese Weise läßt sich das plattenförmige Element auch in engen Räumen leicht handhaben.

Nach weiterem Kippen mit sich dabei durch den Abstandshalter drehender Kipprichtung gelangt das plattenförmige Element in eine Abgabeposition. Dabei wird das plattenförmige Element im wesentlichen über eine seiner nach unten weisenden Ecken gedreht. In dieser Abgabeposition nimmt die zweitgenannte Vorrichtung das plattenförmige Element auf, um es sodann hochkant aufzurichten. Das plattenförmige Element ist dabei in der Abgabeposition gegenüber der Horizontalen nur gering geneigt.

Bei einer weiteren bevorzugten Weiterbildung der ersten Vorrichtung weist der Abstandshalter ein bogenförmiges Element auf, auf dem der dritte Auflagepunkt wandert, falls die Vorrichtung von der ersten Gleichgewichtsstellung in die zweite Gleichgewichtsstellung gekippt wird. Durch dieses bogenförmige Element erreicht man ein sehr weiches, ruckfreies und mit wenig Kraft durchführbares Kippen des plattenförmigen Elements. Dies verhindert ein schlagartiges Umkippen und damit Beschädigungen des plattenförmigen Elements. Bevorzugt ist das bogenförmige Element als Bügel ausgebildet und einseitig an der Vorrichtung angebracht.

Bei einer weiteren bevorzugten Ausführung der erstgenannten erfindungsgemäßen Vorrichtung sind erster und zweiter Auflagepunkt durch eine erste und eine zweite Rolle gebildet. Ferner weist der Abstandshalter bevorzugt eine dritte Rolle auf. Mit diesen Maßnahmen ist es möglich die Vorrichtung samt plattenförmigem Element ohne viel Kraft verschieben zu können.

Bevorzugt weist die erste erfindungsgemäße Vorrichtung einen Griff und einen Tritt auf, wobei der Griff oberhalb des gemeinsamen Schwerpunkts von Vorrichtung und einem auf der Vorrichtung ruhendem aufnehmbaren plattenförmigen Element und der Tritt unterhalb des gemeinsamen Schwerpunktes angeordnet ist. Griff und Tritt ermöglichen es der Arbeitskraft die Vorrichtung auf einfache Weise zu kippen, Insbesondere erlaubt die Anordnung von Griff und Tritt oberhalb bzw. unterhalb des gemeinsamen Schwerpunktes ein Wegrutschen der Vorrichtung zu verhindem, da somit eine Drehung um den Schwerpunkt vollführt werden kann, die eine Horizontalbeschleunigung von Vorrichtung und Platte vermeidet.

Bei einer bevorzugten Ausführungsform der zweiten erfindungsgemäßen Vorrichtung ist eine Stützeinrichtung zum Abstützen der Vorrichtung beim Aufrichten des plattenförmigen Elements vorgesehen. Diese Stützeinrichtung verhindert ein Umkippen der Vorrichtung beim Aufrichten plattenförmiger Elemente. Die Vorrichtung muß daher nicht selbst ein Gegengewicht aufweisen, das ein Umkippen beim Aufrichten verhindern würde. Daher kann aufgrund der Stützeinrichtung die Vorrichtung gewichtsparend ausgebildet werden. Dies erleichtert ihre Handhabbarkeit und spart darüber hinaus wegen des geringeren Materialbedarfs Kosten.

Bei einer bevorzugten Ausführungsform der zweiten erfindungsgemäßen Vorrichtung weist die Stützeinrichtung eine Hebelstützte auf, die unter einer sich über der Vorrichtung befindenden Decke verkeilbar ist, und sich insbesondere beim Aufrichten des plattenförmigen Elements selbsttätig in Folge eines Verkippens der Vorrichtung samt Hebelstütze verkeilt. Dieses selbsttätige Verkeilen sorgt für eine automatische Arretierung der Vorrichtung während des Aufrichtens und erspart daher ein manuelles Arretieren durch die Arbeitskraft. Dies spart Zeit und damit ebenfalls Kosten.

Weiter bevorzugt ist die Stützeinrichtung höhenverstellbar ausgebildet. Die Höhenverstellung ermöglicht ein Anpassen der Vorrichtung an unterschiedliche Deckenhöhen.

Einer weitere bevorzugte Ausführungsform der zweiten erfindungsgemäßen Vorrichtung weist ein Befestigungsmittel, insbesondere einen Klemmhebel, zum Anbringen eines Kraftübertragungsmittels, insbesondere eines Seils, einer Kette, eines Bandes, eines Zahnriemens und/oder einer Zahnstange, an einem plattenförmigen Element auf, sowie eine Winde, die mit dem Kraftübertragungsmittel verbunden ist. Dadurch kann ein plattenförmiges Element mit geringer Kraft aufgerichtet werden. Darüber hinaus vermeidet die Ausgestaltung des Befestigungsmittels als Klemmhebel Haken oder Löcher oder sonstige Vorsprünge oder Aussparungen an dem plattenförmigen Element. Derartige Befestigungsvorrichtungen am plattenförmigen Element selbst sind störend bei der Montage des Elements. Sie müßten nämlich wieder beseitigt werden. Dies würde einen zusätzlichen Arbeitsgang darstellen. Ein derartiger Arbeitsgang entfällt durch die Verwendung eines Klemmhebels.

Bei einer weiteren bevorzugten Ausführungsform der zweiten Vorrichtung ist an der Hebelstütze eine Umlenkrolle für das Kraftübertragungsmittel vorgesehen. Durch eine hoch angebrachte umlenkrolle kann der Hebelarm der Winde verlängert werden. Ein langer Hebelarm wiederum bewirkt, daß man mit einer geringen Kraft das plattenförmige Element aufrichten kann.

Bei einer weiteren bevorzugten Ausführungsform ist eine Hubeinrichtung zum Verstellen der Aufnahmeschaufel zur Aufnahme eines plattenförmigen Elements vorgesehen. Mittels dieser Hubeinrichtung kann man das aufgerichtete plattenförmige Element in seiner Höhe variieren und damit sehr leicht in die erforderliche Montagehöhe bringen. Die Hubeinrichtung kann sich dabei vorteilhaft eines Hebels bedienen. Mittels eines derartigen Hebels läßt sich die Hubeinrichtung ebenfalls mit sehr geringem Kraftaufwand betätigen.

Eine bevorzugte Ausführungsform der zweiten Vorrichtung weist wenigstens drei Rollen auf, wobei die Vorrichtung auf zwei vorderen Rollen auch in einem während des Aufrichtens nach vorne gekippten Zustand ruht. Ist die Vorrichtung hingegen nicht nach vorne gekippt, ruht sie auf wenigstens einer weiteren hinteren Rolle. Durch das Vorsehen dieser Rollen läßt sich die Vorrichtung auf engstem Raum manövrieren. Dies ist besonders vorteilhaft, wenn der zur Verfügung stehende Raum durch das Lagern von Baumaterialien - wie es auf Baustellen häufig vorkommt - zusätzlich eingeschränkt ist.

Erste und zweite Vorrichtung sind derart aufeinander abgestimmt, daß die zweite Vorrichtung ein auf einer ersten Vorrichtung liegendes plattenförmiges Element übernehmen kann. Dazu wird das plattenförmige Element auf der ersten Vorrichtung in eine Abgabeposition (die zweite Gleichgewichtsstellung) gebracht und dann über die tiefstliegende Kante, insbesondere die kurze Kante eines rechteckigen Elements, aufgerichtet.

Das erfindungsgemäße Verfahren wird bevorzugt mit den erwähnten Vorrichtungen durchgeführt. Weitere bevorzugte Weiterbildungen der Erfindung ergeben sich aus weiteren Unteransprüchen und der Beschreibung. Anhand der Zeichnung wird ein Ausführungsbeispiel der Erfindung näher erläutert. In der Zeichnung zeigen:
Fig. 1 einen Transportwagen für Wandelemente gemäß einem Ausführungsbeispiel der erstgenannten Vorrichtung in Vorderansicht;
Fig. 2 den Transportwagen aus Fig. 1 in einer Ansicht von oben;
Fig. 3 den Transportwagen aus Fig. 1 in einer Seitenansicht und zwar in einer Stellung zur Aufnahme eines Wandelements;
Fig. 4 den Transportwagen aus Fig. 1 in erster Gleichgewichtsstellung und aufgenommenen, schräg stehendem Wandelement;
Fig. 5 einen Transportwagen in zweiter Gleichgewichtsstellung mit einem schräg liegenden Wandelement;
Fig. 6 einen Montagewagen als Ausführungsbeispiel einer zweiten Vorrichtung vor dem Aufrichten eines Wandelements;
Fig. 6a den Montagewagen aus Fig. 6 in einer Ansicht von oben;
Fig. 7 den Montagewagen aus Fig. 6 beim Aufrichten eines Wandelements in unter der Decke verkeilter Position;
Fig. 8 den Transportwagen aus Fig. 6 nach dem Aufrichten und mit gelöster Verkeilung;
Fig. 9 den Transportwagen aus Fig. 6 nach dem Aufrichten und mit gelöster Verkeilung ähnlich Fig. 8, jedoch mittels Hubeinrichtung angehobenen Wandelements;
Fig. 10 einen Klemmhebel, der an einem Wandelement angreift.

In den Figuren bezeichnen gleiche Bezugsziffern gleiche Teile.

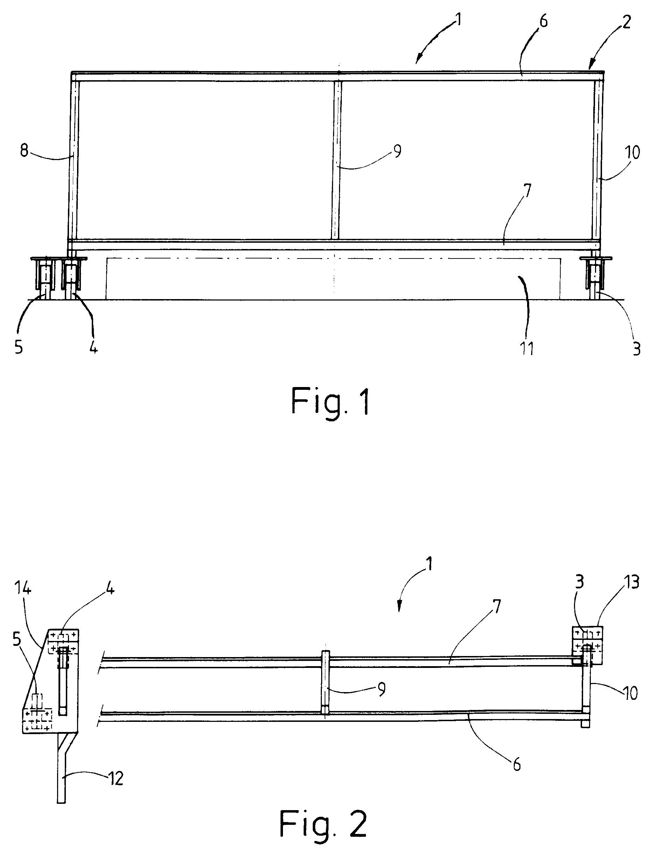

Fig. 1 zeigt als bevorzugtes Ausführungsbeispiel einer ersten Vorrichtung zum Handhaben plattenförmiger Elemente einen Transportwagen 1. Der Transportwagen 1 weist einen Rahmen 2 sowie drei Rollen 3, 4, 5 auf. Der Rahmen 2 weist eine obere Längsstrebe 6, eine untere Längsstrebe 7, eine linke Querstrebe 8, eine mittlere Querstrebe 9 und eine rechte Querstrebe 10 auf. Der Rahmen 2 dient als Aufnahmefläche zur Aufnahme von Wandelementen.

Ferner ist in Fig. 1 eine Palette 11 dargestellt, auf der senkrecht nebeneinander gelagerte, in Fig. 1 nicht dargestellte, Wandelemente stehen. Die Höhe des Rahmens 2, insbesondere der unteren Längsstrebe 7 ist derart bemessen, daß der Transportwagen über die Palette 11 rollen kann.

Fig. 2 zeigt den Transportwagen von Fig. 1 in einer Ansicht von oben. Zusätzlich zu den Teilen aus Fig. 1 ist in Fig. 2 ein Bügel 12 dargestellt. Dieser Bügel 12 ist seitlich am Transportwagen 1 angebracht.

Ferner sieht man in Fig. 2 eine linke Aufnahmeschaufel 13 sowie eine rechte Aufnahmefläche 14. Auf diese Aufnahmeschaufeln 13, 14 kann sich ein von dem Transportwagen aufgenommenes, in Fig. 2 nicht dargestelltes, Wandelement nach unten abstützen. Seitlich wird das aufgenommene Wandelement vor allem durch die obere und untere Längsstrebe 6, 7 sowie die linke, mittlere und rechte Querstreben 8, 9, 10 gehalten. Die Streben 6-10 und die Aufnahmeschaufel 13, 14 bilden eine Fläche zur Aufnahme des Wandelements.

Die Konstruktion des Transportwagens ermöglicht die Aufnahme von Wandelementen von der Palette, den Transport der Wandelemente zum Montageort und das Drehen des Wandelements in die Abgabeposition über einen Raumwinkel.

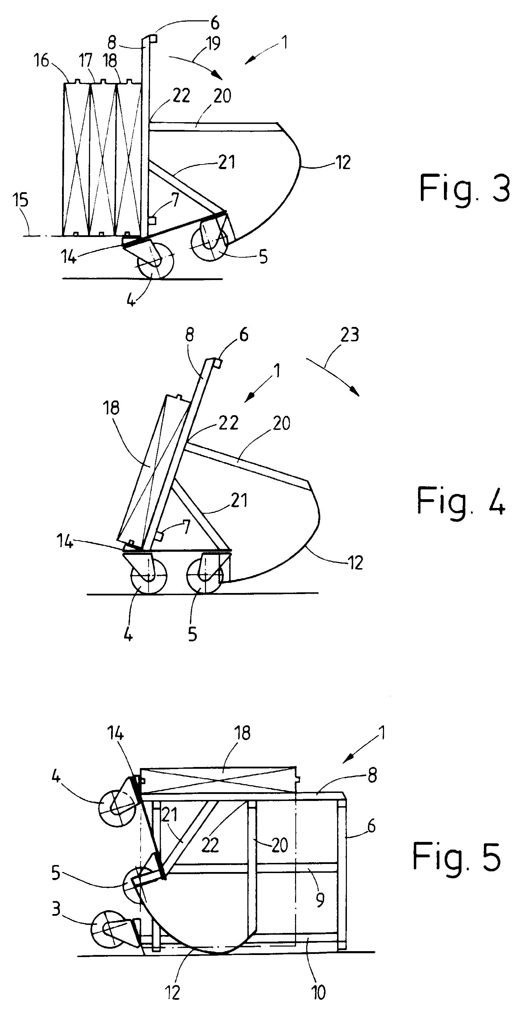

Fig. 3 zeigt den Transportwagen von der Seite. Die strichpunktierte Linie 15 bezeichnet die obere Palettenebene der in Fig. 3 nicht dargestellten Palette 11. Auf dieser Palettenebene 15 stehen senkrecht drei rechteckige Wandelemente 16, 17, 18 nebeneinander. Der Transportwagen 1 ist über die Palette 11 gefahren und dabei nach vorne gekippt. Ähnlich wie bei einer Sackkarre nimmt der Transportwagen mit den Aufnahmeschaufeln 13, 14 das Wandelement 18 auf. Durch Zurückkippen des Transportwagens 1 in Richtung des Pfeils 19 wird das Wandelement 18 angehoben und gelangt schließlich in die in Fig. 4 dargestellte Lage. Der Transportwagen kippt dabei um eine durch die Rollen 3, 4 bestimmte Achse bzw. eine dazu parallele Achse.

Fig. 4 zeigt den Transportwagen 1 in einer ersten Gleichgewichtsstellung. Er ruht auf seinen drei Rollen 3, 4, 5 (Rolle 3 ist in Fig. 4 durch die Rolle 4 verdeckt und daher nicht sichtbar). Das Wandelement 18 ruht mit einer seiner Längskanten auf den Aufnahmeschaufeln 13, 14 (Aufnahmeschaufel 13 ist in Fig. 4 durch die Aufnahmeschaufel 14 verdeckt und daher nicht sichtbar). Mit seiner Rückseite ruht das Wandelement 18 auf dem Rahmen 2, insbesondere den Streben 6 bis 10.

In den Fig. 3 und 4 ist ferner ein Abstandshalter 5, 12, 20, 21 dargestellt. Dieser Abstandshalter besteht aus dem Bügel 12 sowie einer oberen Bügelstrebe 20 und einer unteren Bügelstrebe 21. Ferner zählt zum Abstandshalter die Rolle 5. Diese Elemente sorgen zusammen dafür, daß der Transportwagen nicht umkippt und in einem ersten Gleichgewichtszustand ruht. Dabei behält ein bestimmter Punkt des Rahmens 2, beispielsweise der Punkt 22 dank der Querstrebe 8 immer einen definierten Abstand zum Untergrund.

Fig. 5 zeigt den Transportwagen 1 in einer zweiten Gleichgewichtsstellung. Nach Transport zum Montageort wird das Wandelement 18 durch noch weitergehendes Zurückkippen des Transportwagens in Richtung des Pfeils 23 in Fig. 4 in eine Abgabeposition gebracht. Dabei dreht sich das Wandelement 18 im wesentlichen um seine dem Bügel 12 gegenüberliegende untere Ecke. Der genaue Drehpunkt kann jedoch auch in geringem Abstand zu dieser Ecke liegen. Insbesondere kann der Drehpunkt auch außerhalb des von dem Wandelement 18 begrenzten Raumes liegen. Der einseitig angebrachte Abstandshalter, unter anderem bestehend aus dem Bügel 12, ermöglicht ein einfaches manuelles Umlegen des Wandelements, da das Wandelement über seinen Schwerpunkt gedreht bzw. gekippt wird.

Bei diesem weitergehenden Kippvorgang wir die Kipprichtung durch den Bügel 12 gedreht.

Durch diesen zweiteiligen Kippvorgang, nämlich einerseits Kippen des Wandelements 18 in eine erste Gleichgewichtsstellung gemäß Fig. 4 und andererseits Kippen des Wandelements 18 in eine zweite Gleichgewichtsstellung gemäß Fig. 5 erreicht man, daß ein auf einer Längsseite aufrecht stehendes Wandelement 18 auf eine Querseite gekippt wird. Dieser Kippvorgang, der letztlich das Wandelement 18 um einen Raumwinkel dreht, erfolgt ruckfrei und ohne besonderen Kraftaufwand, da der Bügel 12 als Kurvenscheibe ausgebildet ist.

Der Transportwagen 1 mit aufgenommenem Wandelement 18 befindet sich sowohl in Fig. 4 als auch in Fig. 5 jeweils in einer Gleichgewichtsstellung und ruht jeweils auf drei Auflagepunkten. In der ersten Gleichgewichtsstellung gemäß Fig. 4 bilden die drei Rollen 3, 4, 5 (Rolle 3 in Fig. 4 durch Rolle 4 verdeckt und daher nicht sichtbar) die drei Auflagepunkte, mit denen der Transportwagen auf dem Untergrund aufliegt.

In der in Fig. 5 dargestellten zweiten Gleichgewichtsstellung liegt der Transportwagen 1 zum einen mit dem Bügel 12 auf dem Untergrund auf. Weitere Auflagepunkte werden gebildet durch die rechte Transportwagenseite, Beispielsweise bildet die Ecke aus oberer Längsstrebe 6 und rechter Querstrebe 10 einen Auflagepunkt, sowie die Ecke aus unterer Querstrebe 7 sowie rechter Querstrebe 10 einen weiteren Auflagepunkt. Es ist auch möglich, daß spezielle Vorsprünge am Rahmen 2 vorgesehen sind, auf denen der Transportwagen in zweiter Gleichgewichtsstellung aufliegt.

Beim Übergang von der ersten Gleichgewichtsstellung in die zweite Gleichgewichtsstellung wandert ein Auflagepunkt über den Bügel 12. Durch das Wandern des Auflagepunktes wird ein schlagartiges Umkippen des Transportwagens vermieden. Das Kippen des Wandelements 18 kann daher sehr weich und sanft und somit materialschonend erfolgen.

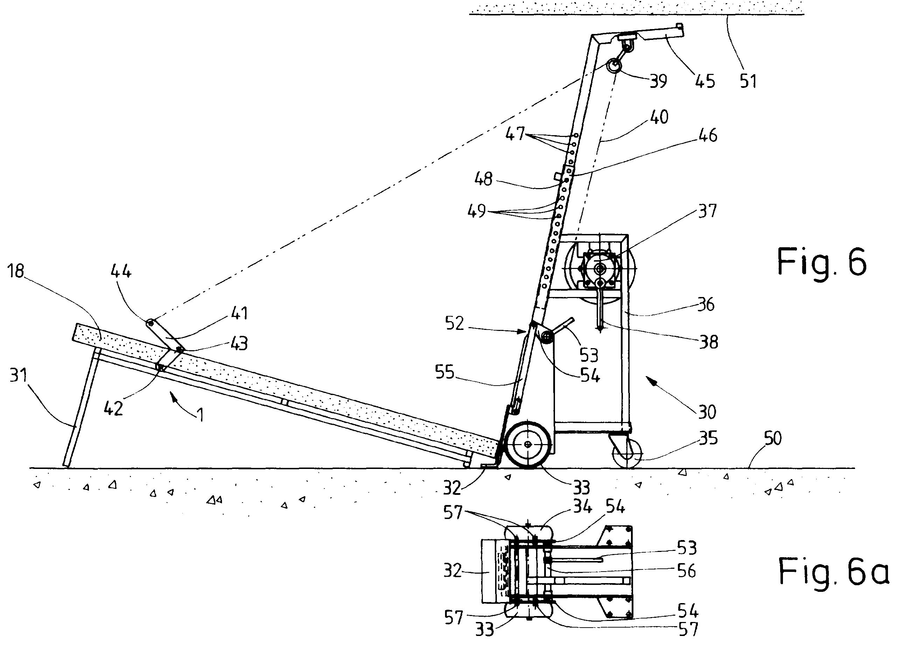

Fig. 6 zeigt als Ausführungsbeispiel einer zweiten erfindungsgemäßen Vorrichtung einen Montagewagen 30 und zwar auf der rechten Hälfte von Fig. 6. Auf der linken Hälfte von Fig. 6 sieht man das Wandelement 18, das auf einem Transportwagen 1 ruht. Bezugsziffer 31 zeigt den Abstandshalter, der aus oberer und unterer Bügelstrebe 20, 21 sowie dem Bügel 12 und der in Fig. 6 nicht dargestellten Rolle 5 besteht.

Das Wandelement 18 ruht auf dem Rahmen 2 des Transportwagens 1. In Fig. 6 ist das Wandelement 18 entlang seiner Längsseite sichtbar dargestellt. Eine Querseite liegt am Montagewagen 30 an. Diese Position des Transportwagens 1 und des Wandelements 18 entspricht der zweiten Gleichgewichtsstellung aus Fig. 5. Das heißt, das Wandelement 18 befindet sich in einer schräg liegenden Position, in der eine seiner kurzen Kanten nach unten weist und im wesentlichen waagerecht ausgerichtet ist. Diese kurze Kante hat einen kleinen Abstand zum Boden. Dieser Abstand ist so groß gewählt, daß eine Aufnahmeschaufel 32 des Montagewagens 30 unter diese Kante untergreifen kann.

Der Montagewagen 30 weist ferner zwei große vordere Rollen 33 und 34 auf. Ferner ist wenigstens eine weitere, bevorzugt sind zwei weitere, hintere Rollen 35 vorgesehen.

Der Montagewagen 30 besteht aus einem Gestell 36 mit mehreren horizontalen, vertikalen und dazu schrägen Streben.

Außerdem weist der Montagewagen 30 eine Winde 37 mit einer Kurbel 38 auf. Mit der Winde 37 und mit der Kurbel 38 läßt sich ein über eine Umlenkrolle 39 geführtes Seil 40 mit einem Klemmhebel 41 verbinden. Der Klemmhebel 41 hat eine L-förmige seitliche Kontur. Zwei an dem Klemmhebel 41 angebrachte Nasen 42 und 43 umgreifen das Wandelement 18. Bei Aufbringen eines Zuges an einer Befestigungsöse 44 verklemmt sich der Klemmhebel um das Wandelement 18. Durch dieses Verklemmen erhält man eine zeitweilig feste, aber lösbare Verbindung zwischen Klemmhebel und Wandelement 18, mittels derer das Wandelement angehoben werden kann.

Der Montagewagen 30 weist ferner eine Hebelstütze 45 auf. Diese Hebelstütze 45 ist in einem Profil 46 höhenverstellbar geführt.

Bohrungen 47 sind an der Hebelstütze vorgesehen, um mittels eines Bolzens 48 mit den Bohrungen 49 eine Verbindung schaffen zu können.

Die Hebelstütze 45 ist in einer derartigen Höhe eingestellt, daß sich der Montagewagen 30 ohne weiteres innerhalb des durch Oberkante des Fußbodens 50 und Unterkante der Decke 51 gebildeten Raumes herumfahren läßt. Weiterhin ist die Höhe derart bemessen, daß bei einem Kippen des Montagewagens 30 nach vorne, die Hebelstütze 45 an der Decke 51 angreift und sich dort verkeilt.

Des weiteren weist der Montagewagen 30 eine Hubeinrichtung 52 auf. Diese Hubeinrichtung 52 ist mit der Aufnahmeschaufel 32 verbunden. Die Hubeinrichtung 52 besteht aus einem Hubhebel 53, einem Zwischenstück 54 und einer Verbindungsstange 55. Bei Betätigen des Hubhebels 53 wird die Aufnahmefläche 32 in Ihrer Höhe variiert. Dadurch läßt sich auf einfache Weise das Wandelement 18 anheben.

In Fig. 6a ist der Montagewagen 30 in einer Ansicht von oben dargestellt. Außer den bereits beschriebenen Teilen mit gleichen Bezugsziffern zeigt Fig. 6a eine Welle 56, die bei Betätigen des Hubhebels 53 gedreht wird. Darüber hinaus ist noch eine Mechanik gezeigt, die aus Verbindungselementen 57 besteht und das Zwischenstück 54 mit der Verbindungsstange 55 sowie die Verbindungsstange 55 mit der Aufnahmefläche 32 verbindet.

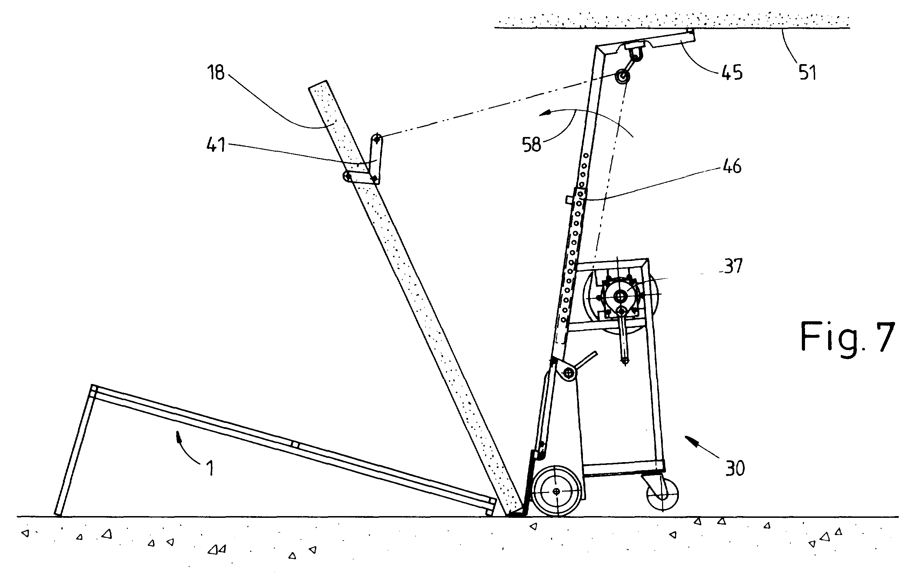

Fig. 7 zeigt den Montagewagen 30 aus Fig. 6, außerdem das teilweise aufgerichtete Wandelement 18, sowie den Transportwagen 1.

In Fig. 7 ist das Wandelement 18 teilweise durch Betätigen der Winde 37 aufgerichtet. Dadurch kippt der Montagewagen 30 aufgrund des hohen Gewichts des Wandelements 18 in Richtung des Pfeils 58, der die Kipprichtung anzeigt. Durch dieses Verkippen verkeilt sich die Hebelstütze 45 unter der Decke 51. Dies Verkeilen verhindert ein Umkippen des Montagewagens.

Aufgrund der hohen Konstruktion des unter der Decke angreifenden Montagewagens 30 läßt sich der Montagewagen 30 sehr schmal, das heißt mit einer kleinen Grundfläche konstruieren. Dadurch ist der Montagewagen 30 sehr wendig und läßt sich selbst in kleinsten Räumen einsetzen.

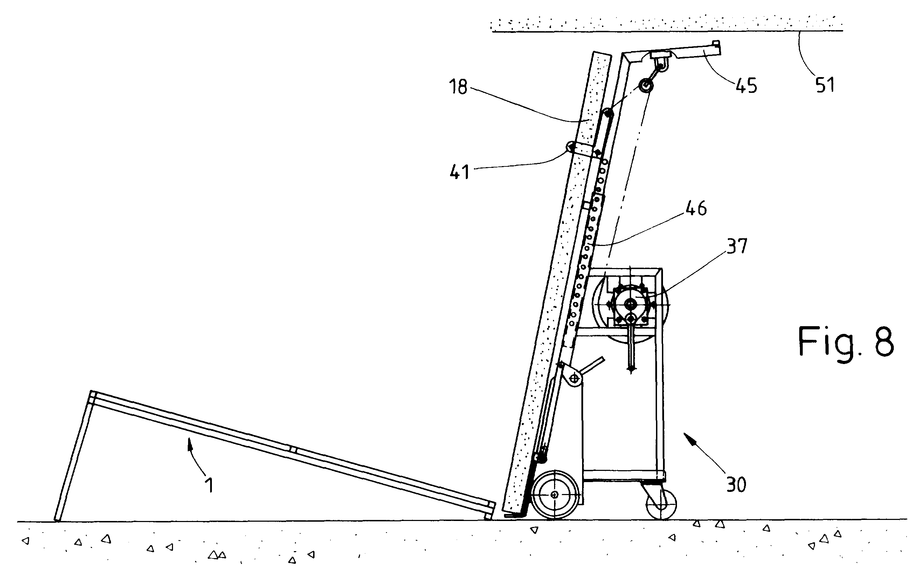

Fig. 8 zeigt den Montagewagen 30 in einer weiteren Stellung. Das Wandelement 18 wurde nun soweit an das schräg nach hinten geneigte Profil 46 herangezogen, daß es nunmehr auf dem Montagewagen 30 aufliegt. Das Wandelement 18 ist dabei ebenfalls schräg nach hinten geneigt, wenngleich mit nur geringer Neigung gegenüber der Vertikalen.

Der gemeinsame Schwerpunkt aus Wandelement 18 und Montagewagen 30 liegt bei lotrechter Projektion innerhalb der Standfläche des Montagewagens, so daß dieser nicht mehr nach vorne gekippt ist. Dadurch hat sich die Verkeilung der Hebelstütze 45 unterhalb der Decke 51 gelöst. Nunmehr läßt sich der Montagewagen samt Wandelement 18 auf engstem Raum bewegen.

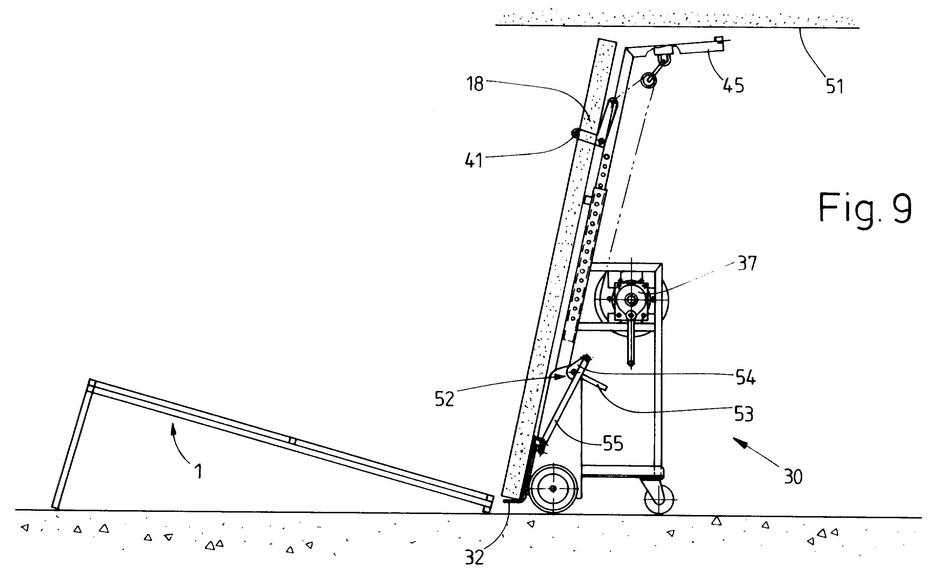

Fig. 9 zeigt den Montagewagen 30 ebenfalls nach dem Aufrichten des Wandelements 18 und mit gelöster Verkeilung zwischen Hebelstütze 45 und Decke 51. Im Unterschied zu Fig. 8 zeigt Fig. 9 das Wandelement 18 in durch die Hubeinrichtung 52 angehobener Stellung.

Man sieht, daß der Hubhebel 53 nach unten gedrückt ist. Dadurch wird durch das Zwischenstück 54 die Verbindungsstange 55 nach oben gezogen. Die Verbindungsstange 55 wiederum zieht die Aufnahmefläche 32 nach oben. Auf diese Weise läßt sich das Wandelement 18 in die gewünschte Höhe bringen.

Zur Montage wird dann das leicht geneigte, nahezu aufrecht stehende Wandelement 18 in seine senkrechte Endposition gekippt und montiert.

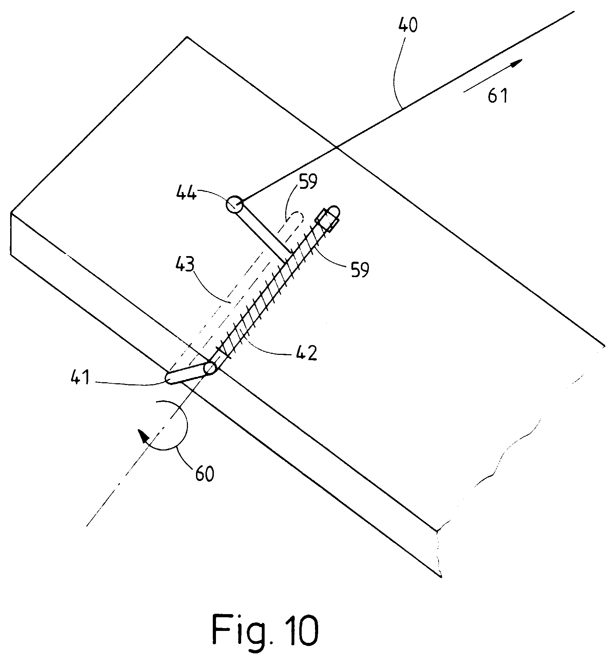

Fig. 10 zeigt eine vergrößerte Darstellung des Klemmhebels 41 samt Wandelement 18. Der Klemmhebel 41 weist zwei langgestreckte Nasen 42 und 43 auf. Diese Nasen sind mit je einer Gummiummantelung 59 versehen, um eine Beschädigung des Wandelements 18 zu vermeiden. Ferner ist in Fig. 10 die Befestigungsöse 44 dargestellt, an der das Seil 40 befestigt ist.

Wird der Klemmhebel in Richtung des Pfeils 60 gedreht, verspannt sich der Klemmhebel 41 um das Wandelement 18 herum und sorgt für eine feste Verbindung zwischen Klemmhebel 41 und Wandelement 18. Der Pfeil 60 gibt daher die Klemmrichtung an.

Der Klemmhebel 41 ist derart an dem Wandelement 18 angesetzt, daß bei einem Zug des Seils 40 in Richtung des Pfeiles 61 sich der Klemmhebel automatisch am Wandelement 18 verspannt.

Beide dargestellten Vorrichtungen, nämlich der Transportwagen 1 und der Montagewagen 30 werden sinnvollerweise durch ein Montageverfahren betrieben. Dabei wird zuerst ein Wandelement 18 auf seiner Längsseite stehend auf den Transportwagen 1 aufgenommen. Danach wird das Wandelement in eine erste Gleichgewichtsstellung gemäß Fig. 4 gekippt. Nun steht das Wandelement auf seiner langen Kante und kann damit platzsparend in engen Räumen manövriert werden.

Am Montageort angelangt, wird der Transportwagen 1 weitergekippt, wobei sich durch den beschriebenen Abstandshalter die Kipprichtung dreht, und gelangt dabei in eine zweite Gleichgewichtsstellung gemäß Fig. 5. Nun befindet sich eine kurze Seite des Wandelements unten in einer waagerechten Stellung. In diesem Moment kommt der Montagewagen 30 zum Einsatz. Seine Aufnahmefläche 32 greift unter der kurzen Kante an. Der Klemmhebel 41 wird um das Wandelement 18 gelegt. Durch Betätigen der Winde 37 verklemmt sich der Klemmhebel 41 um das Wandelement 18 und richtet das Wandelement 18 auf, so daß es auf einer kurzen Seite zum Stehen kommt. Dabei lehnt sich das Wandelement 18 hochkant stehend an den Montagewagen 30 an und kann nunmehr an seine endgültige Position gefahren werden. Die endgültige Höhe wird eingestellt durch die Hubeinrichtung 53. Nachdem nun auch die Höhe korrekt justiert ist, wird das Wandelement 18 endgültig im fertigzustellenden Raum montiert.

Mittels dieser beiden Vorrichtungen, nämlich dem Transportwagen 1 und dem Montagewagen 30, sowie dem entsprechenden Verfahren zum Bedienen dieser Vorrichtungen läßt sich auf sehr bequeme Weise und mit nur sehr wenigen Arbeitskräften und zugleich geringem Kraftaufwand eine Wand aus schweren, vorgefertigten Wandelementen fertigen.

### Bezugszeichenliste:

- 1: Transportwagen
- 2: Rahmen
- 3: Rolle
- 4: Rolle
- 5: Rolle
- 6: obere Längsstrebe
- 7: untere Längsstrebe
- 8: linke Querstrebe
- 9: mittlere Querstrebe
- 10: rechte Querstrebe
- 11: Palette
- 12: Bügel
- 13: Aufnahmeschaufel
- 14: Aufnahmeschaufel
- 15: obere Palettenebene
- 16: Wandelement
- 17: Wandelement
- 18: Wandelement
- 19: Pfeil (Drehrichtung)
- 20: obere Bügelstrebe
- 21: untere Bügelstrebe
- 22: Punkt an Querstrebe 8
- 23: Drehrichtung
- 24: Auflagepunkt
- 30: Montagewagen
- 31: Abstandshalter
- 32: Aufnahmeschaufel
- 33: vordere Rolle
- 34: vordere Rolle
- 35: hintere Rolle
- 36: Gestell
- 37: Winde
- 38: Kurbel
- 39: Umlenkrolle
- 40: Seil
- 41: Klemmhebel
- 42: Nase
- 43: Nase
- 44: Befestigungsöse
- 45: Hebelstütze
- 46: Profil
- 47: Bohrung
- 48: Bolzen
- 49: Bohrung
- 50: Fußboden
- 51: Decke
- 52: Hubeinrichtung
- 53: Hubhebel
- 54: Zwischenstück
- 55: Verbindungsstange
- 56: Welle
- 57: Verbindungselement
- 58: Pfeil (Kipprichtung)
- 59: Gummiummantelung
- 60: Pfeil (Klemmrichtung)
- 61: Pfeil (Zugrichtung)

## Patentansprüche

1. Vorrichtung zum Handhaben plattenförmiger Elemente, insbesondere von Bauwerksteilen, mit:
a) einer Aufnahmefläche (2, 6, 7, 8, 9, 10, 13, 14) zum Aufnehmen wenigstens eines plattenförmigen Elements (16, 17, 18) und
b) einem Abstandshalter (5, 12, 20, 21, 31) zum Halten eines Teilbereichs der Aufnahmefläche (2, 6, 7, 8, 9, 10, 13, 14) im Abstand zum Untergrund während eines Kippens der Vorrichtung (1) und zum Drehen der Kipprichtung während des Kippens der Vorrichtung (1).

2. Vorrichtung nach Anspruch 1 mit:
a) einem ersten und einem zweiten Auflagepunkt (3, 4), wobei die Vorrichtung (1) um die durch diese Punkte bestimmte Achse kippbar ist, wodurch ein plattenförmiges Element (16, 17, 18) von einer auf einer ersten, insbesondere langen, Kante im wesentlichen aufrecht stehenden Position von der Vorrichtung (1) aufnehmbar ist,
b) wobei der Abstandshalter (5, 12, 20, 21, 31) derart angeordnet ist, daß er einen dritten Auflagepunkt (5) bildet, falls die Vorrichtung (1) in eine erste Gleichgewichtsstellung gekippt ist, in der ein aufnehmbares plattenförmiges Element (16, 17, 18) in eine auf der ersten Kante schräg stehenden Position gelangen kann, und
c) einer Querseite, die derart angeordnet ist, daß sie einen vierten Auflagepunkt bildet, falls die Vorrichtung (1) in eine zweite Gleichgewichtsstellung gekippt ist, in der ein aufnehmbares plattenförmiges Element (16, 17, 18) in eine schräg liegende Position gelangt in der eine der ersten Kante benachbarte zweite, insbesondere kurze, Kante nach unten weist und im wesentlichen waagerecht ausgerichtet ist, wobei die Vorrichtung (1) in zweiter Gleichgewichtsstellung auf einem der ersten und zweiten Auflagepunkte, sowie dem dritten und vierten Auflagepunkt ruht.

3. Vorrichtung nach Anspruch 1 oder 2, wobei der Abstandhalter ein bogenförmiges Element, insbesondere einen Bügel (12), aufweist, wobei das bogenförmige Element bzw. der Bügel vorzugsweise derart ausgebildet sind, daß auf ihm während des Kippens der Vorrichtung von der ersten Gleichgewichtsstellung in die zweite Gleichgewichtsstellung der dritte Auflagepunkt wandern kann.

4. Vorrichtung nach einem der vorstehenden Ansprüche, bei der erster und zweiter Auflagepunkt durch erste und zweite Rollen (3, 4) gebildet sind und der Abstandshalter eine dritte Rolle (5) aufweist.

5. Vorrichtung zum Handhaben plattenförmiger Elemente, insbesondere von Bauwerksteilen, mit:
a) wenigstens einer Aufnnahmeeinrichtung, insbesondere Aufnahmeschaufel (32) zur Aufnahme eines plattenförmigen Elements (16, 17, 18) und
b) einer Zugeinrichtung (37, 38, 39, 40) zum Aufrichten des aufgenommenen plattenförmigen Elements (16, 17, 18).

6. Vorrichtung nach Anspruch 5, mit einer gegebenenfalls höhenverstellbaren Stützeinrichtung (45) zum Abstützen der Vorrichtung (30) beim Aufrichten des plattenförmigen Elementes (16, 17, 18), wobei vorzugsweise eine Hebelstütze (45) aufweist, die unter einer Decke (51) verkeilbar ist, insbesondere beim Aufrichten eines plattenförmigen Elements (16, 17, 18) selbsttätig durch Verkippen der Vorrichtung (30) samt Hebelstütze (45) verkeilbar ist.

7. Vorrichtung nach Anspruch 5 oder 6, bei der die Zugeinrichtung aufweist:
a) ein Befestigungsmittel (41), insbesondere einen Klemmhebel, zum Anbringen eines Kraftübertragungsmittels (40), insbesondere eines Seils, einer Kette, eines Bandes, eines Zahnriemens und/oder einer Zahnstange, an einem plattenförmigen Element, und
b) eine Winde (37), die mit dem Kraftübertragungsmittel (40) verbunden ist.

8. Vorrichtung nach einem der Ansprüche 8 bis 15, die eine Hubeinrichtung (52) zum Verstellen der Höhe der Aufnahmeschaufel (32) aufweist.

9. Vorrichtung nach einem der vorhergehenden Ansprüche, die wenigstens drei Rollen (33, 34, 35) aufweist, wobei die Vorrichtung auf zwei vorderen Rollen (33, 34) auch in einem während des Aufrichtens nach vorne gekippten Zustand ruht und einer hinteren Rolle (35), auf der die Vorrichtung im nicht nach vorne gekippten Zustand ruht.

10. Vorrichtung nach einem der vorhergehenden Ansprüche, die derart ausgebildet ist, daß ein auf einer Vorrichtung (30) nach einem der Ansprüche 1 bis 7 in zweiter Gleichgewichtsstellung lagerndes plattenförmiges Element (16, 17, 18) in schräg liegender Position mit einer, insbesondere kurzen, nach unten weisenden und im wesentlichen waagerecht ausgerichteten Kante aufrichtbar ist.

11. Verfahren zum Handhaben plattenförmiger Elemente, insbesondere von Bauwerksteilen, mit folgenden Schritten:
a) Aufnehmen wenigstens eines auf einer ersten, insbesondere langen, Kante im wesentlichen aufrecht stehenden plattenförmigen Elements (16, 17, 18),
b) Kippen des plattenförmigen Elements (16, 17, 18) über eine seiner Ecken, insbesondere derart, daß das plattenförmige Element (16, 17, 18) in eine schräg liegende Position gelangt, in der eine der ersten Kante benachbarte zweite, insbesondere kurze, Kante nach unten weist und im wesentlichen waagerecht ausgerichtet wird, und
c) Aufrichten des plattenförmigen Elements (16, 17, 18) in eine auf der zweiten Kante im wesentlichen aufrecht stehende Position.

12. Verfahren nach Anspruch 11, mit folgendem zusätzlichen Schritt zwischen Schritt a) und Schritt b): Kippen des plattenförmigen Elements (16, 17, 18) um eine zur ersten Kante parallelen Achse, so daß das plattenförmige Element in eine auf der ersten Kante schräg stehende Position gelangt.

13. Verfahren nach einem der vorhergehenden Ansprüche, bei dem beim Kippen des plattenförmigen Elements (16, 17, 18) die Kipprichtung gedreht wird.

14. Verfahren nach einem der Ansprüche 11 bis 13, bei dem bis Schritt b) mit einer Vorrichtung nach einem der Ansprüche 1 bis 7 und der Schritt c) mit einer Vorrichtung nach einem der Ansprüche 8 bis 18 durchgeführt werden.

15. Verfahren nach einem der Ansprüche 11 bis 14, bei dem das plattenförmige Element durch Betätigen einer Winde (37) aufgerichtet wird.
